# NEW EUROPEAN PATENT SPECIFICATION

(11) **EP 1 862 576 B3**
(45) Date of publication of this specification: **18.01.2012**
(45) Mention of the grant of the patent: 20.10.2010
(21) Application number: 07109106.0
(22) Date of filing: 29.05.2007
(51) Int. Cl.: D06F 37/04, D06F 37/22

(54) **Washing machine having balancer and method of manufacturing balancer thereof**
Waschmaschine mit Auswuchtvorrichtung und Verfahren zur Herstellung einer Auswuchtvorrichtung
Machine à laver dotée d'un dispositif d'équilibrage et procédé de fabrication de son dispositif d'équilibrage

(30) Priority: 01.06.2006 KR 20060049477; 01.06.2006 KR 20060049481
(43) Date of publication of application: 05.12.2007
(73) Proprietor: Samsung Electronics Co., Ltd., Suwon-si, Gyeonggi-do (KR)
(72) Inventor: Kim, Ja Young, Suwon-si Gyeonggi-do (KR); Michiaki, Ito, Yeongtong-gu, Suwon-si Gyeonggi-do (KR); Ryu, Doo Young, Suwon-si Gyeonggi-do (KR); Kang, Myung Sun, Maetan-3-dong Paldal-gu, Suwon-si Gyeonggi-do (KR)
(74) Representative: Walaski, Jan Filip

(56) References cited:
- SU-A1- 1 461 796
- US-A- 3 321 997
- US-A- 5 870 908

## Description

### BACKGROUND OF THE INVENTION

### 1. Field of the Invention

The present invention relates generally to a washing machine having at least one balancer, and more particularly to a washing machine having at least one balancer capable of reducing a manufacturing cost and an assembly time, and allowing the balancer assembled to a spin tub to be easily replaced.

### 2. Description of the Related Art

In general, washing machines do the laundry by spinning a spin tub containing the laundry by driving the spin tub with a driving motor. In a washing process, the spin tub is spun forward and backward at a low speed. In a dehydrating process, the spin tub is spun in one direction at a high speed.

When the spin tub is spun at a high speed in the dehydrating process, if the laundry leans to one side without uniform distribution in the spin tub orifthe laundry leans to one side due to the abrupt acceleration of the spin tub in an early stage of the dehydrating process, the spin tub undergoes a deviation between the center of gravity and the center of rotation to thus cause noise and vibration. The repetition of this phenomenon causes parts, such as a spin tub and its rotating shaft, a driving motor, etc., to break or causes a reduction in the life span of the parts.

Particularly, a drum type washing machine has a structure in which the spin tub containing laundry is horizontally disposed, the spin tub is spun at a high speed in the state where laundry is collected on the bottom of the spin tub by gravity in the dehydrating process, so that the spin tub undergoes a deviation between the center of gravity and the center of rotation to have a high possibility of causing excess noise and vibration.

Thus, the drum type washing machine is typically provided with at least one balancer for maintaining adynamic balance of the spin tub. The balancer is equally applied to an upright type washing machine in which the spin tub is vertically installed.

An example of a washing machine having ball balancers is disclosed in Korean Patent Publication No. 1999-0038279. The ball balancers of a conventional washing machine include racers installed on the top and the bottom of a spin tub in order to maintain a dynamic balance when the spin tub is spun at a high speed, and steel balls and viscous oil are disposed and freely move in the racers.

Thus, when the spin tub is spun without maintaining a dynamic balance due to an unbalanced eccentric structure of the spin tub itself and a lopsided distribution of the laundry in the spin tub, the steel balls compensates for this unbalance, and thus the spin tub can maintain the dynamic balance.

However, the conventional washing machine has a structure in which an entire circumferential edge of each ball balancer is seam-welded to the spin tub, so that the spin tub forms part of the surface of each ball balancer, or a structure in which each ball balancer includes upper and lower plates fused to each other, thereby requiring a high manufacturing cost and long assembly time, which lowers mass productivity.

Further, the conventional washing machine has a structure in which each ball balancer coupled to the spin tub cannot be replaced with a new one, thus necessitating discarding the entire spin tub when any ball balancer is determined to be a failure in a quality inspection.

In addition, each ball balancer of the conventional washing machine has an irregularly stepped structure because fusion scraps are generated around a long fusion portion (or a long seam portion) formed along a path of motion of balls during fusion, so that the balls generate unnecessary noise and vibration while moving along the fusion portion.

SU 1 461 796 A1 discloses a balancer 4. The balancer includes a couple of mass members in the form of balls, wherein the plurality of ball mass members are separated from each other.

US 5,870,908 A discloses a balancing device for correcting a load imbalance in a rotating membersuch as a spin basket of a washing machine. The balancing device includes tube members in a circular configuration with a fluid and spherical ballast members provided within the hollow interior of the tube members. In use, the balancing device is positioned loosely on the bottom of a vertical spin basket of a washing machine.

US 3,321,997 A relates to a washing machine with a vertical rotating spin tub. This reference mainly ocuses on a load equalizer for containers to be rotated about a vertical axis. The load equalizer in form of a tubular anchor ring or toroid is held in position against a converging outer wall of an inner tub by brackets.

### SUMMARY OF THE INVENTION

Accordingly, the present invention has been made to solve the above-mentioned problems occurring in the prior art, and an object of the present invention is to provide a washing machine having at least one balancer that is capable of reducing a manufacturing cost and an assembly time, and allowing the balancer assembled to a spin tub to be replaced with a new balancer. Additional aspects and/or advantages of the invention will be set forth in part in the description which follows and, in part, will be apparent from the description, or may be learned by practice of the invention.

According to the invention, there is provided a washing machine having a spin tub and a balancer having an annular shape, characterized in that a front end and a rear end of the spin tub are open, and the spin tub includes a front member and a rear member, wherein the front member and the rear member are provided with an annular recess, and wherein the balancer is provided in the recess of the front member and/or in the recess of the rear member, respectively, wherein the balancer includes viscous fluid and a plurality of balls disposed and movable within an internal space of the balancer, wherein the balancer has a cross section providing an internal quadrilateral space in which the viscous fluid can flow to internal corners thereof when the balls are moving within the balancer during the rotation of the spin tub, and wherein the internal corners of the internal quadrilateral space of the balancer are rounded.

### BRIEF DESCRIPTION OF THE DRAWINGS

The above and other aspects and advantages of the present invention will be more apparent and more readily appreciated from the following detailed description of the embodiments, taken in conjunction with the accompanying drawings, in which:
FIG. 1 is a sectional view illustrating the schematic structure of a washing machine according to the present invention;
FIG. 2 is a perspective view illustrating balancers according to a first embodiment of the present invention, in which the balancers are disassembled from a spin tub;
FIG. 3 is a sectional view taken along line A-A of FIG. 2 of the balancer according to the first embodiment of the present invention.
FIG. 4 is a sectional view taken along line A-A of FIG. 2 of the balancer according to the second embodiment of the present invention.
FIG. 5 is a sectional view taken along line A-A of FIG. 2 of the balancer according to the third embodiment of the present invention.
FIG. 6 is a sectional view taken along line A-A of FIG. 2 of the balancer according to the fourth embodiment of the present invention.
FIG. 7 is a perspective view of a linear metal pipe used as a material for a balancer according to the first embodiment of the present invention
FIG. 8 is a perspective view of the linear pipe according to the first embodiment of the present invention bent into an annular shape.
FIG. 9 is a perspective view of the bent linear pipe according to the first embodiment of the present invention welded at opposite ends thereof.
FIG. 10 is a perspective view of the linear pipe according to the second embodiment of the present invention.,
FIG. 11 is a perspective view of the linear pipe according to the third embodiment of the present invention.
FIG. 12 is a perspective view of the linear pipe according to the fourth embodiment of the present invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

Hereinafter, exemplary embodiments of the present invention will be described with reference to the attached drawings.

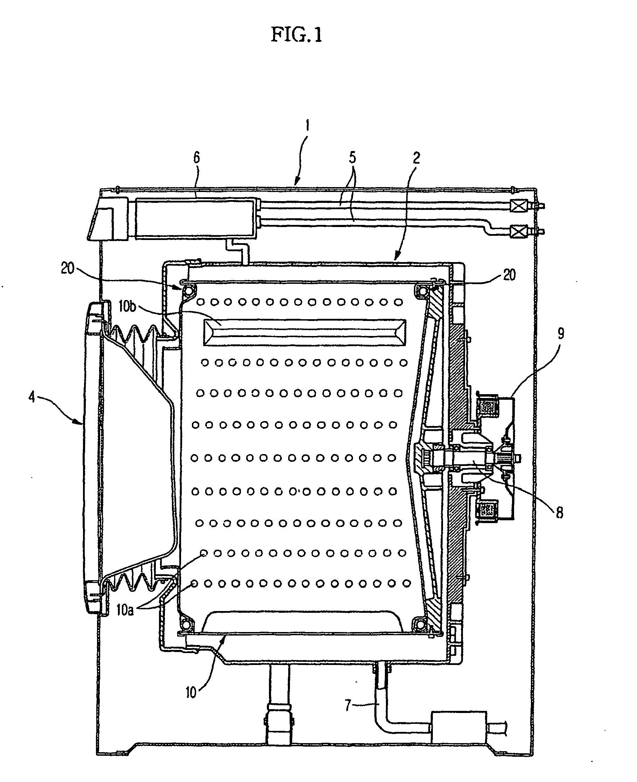

FIG. 1 is a sectional view illustrating the schematic structure of a washing machine according to the present invention.

As illustrated in FIG. 1, a washing machine according to the present invention includes a housing 1 forming an external structure of the washing machine, a water reservoir 2 installed in the housing 1 and containing washing water, a spin tub 10 disposed rotatably in the water reservoir 2, which allows laundry to be placed within and washed therein, and a door 4 hinged to an open front of the housing 1.

Feed pipes 5 and a detergent feeder 6 are disposed above the water reservoir 2 in order to supply washing water and detergent to the water reservoir 2, and a drain pipe 7 installed therebelow in order to drain the washing water contained in the water reservoir 2 to the outside of the housing 1 when the laundry is completely done.

The spin tub 10 has a rotary shaft 8 disposed at the rear thereof so as to extend through the rear of the water reservoir 2, and a driving motor 9, with which the rotary shaft 8 is coupled, installed on a rear outer side thereof. Therefore, when the driving motor 9 is driven, the rotary shaft 8 is rotated together with the spin tub 10.

The spin tub 10 is provided with a plurality of dehydrating holes 10a at a periphery thereof to allow the water contained in the water reservoir 2 to flow into the spin tub 10 together with the detergent to wash the laundry in a washing cycle, and to allow the water to be drained to the outside of the housing 1 through a drain pipe 7 in a dehydrating cycle.

The spin tub 10 has a plurality of lifters 10b disposed longitudinally therein. Therefore, as the spin tub 10 rotates at a low speed in the washing cycle, the laundry submerged in the water is raised up from the bottom of the spin tub 10 and then is lowered to the bottom of the spin tub 10, so that the laundry can be effectively washed.

Thus, in the washing cycle, the rotary shaft 8 alternately rotates forward and backward due to the driving motor 9 to spin the spin tub 10 at a low speed, so that the laundry is washed. In the dehydrating cycle, the rotary shaft 8 rotates in one direction to spin the spin tub 10 at a high speed, so that the laundry is dehydrated.

When spun at a high speed in the dehydrating cycle, the spin tub 10 may undergo a deviation between the center of gravity and the center of rotation of the spin tub 10, or the laundry may lean to one side without uniform distribution in the spin tub 10. In this case, the spin tub 10 does not maintain a dynamic balance.

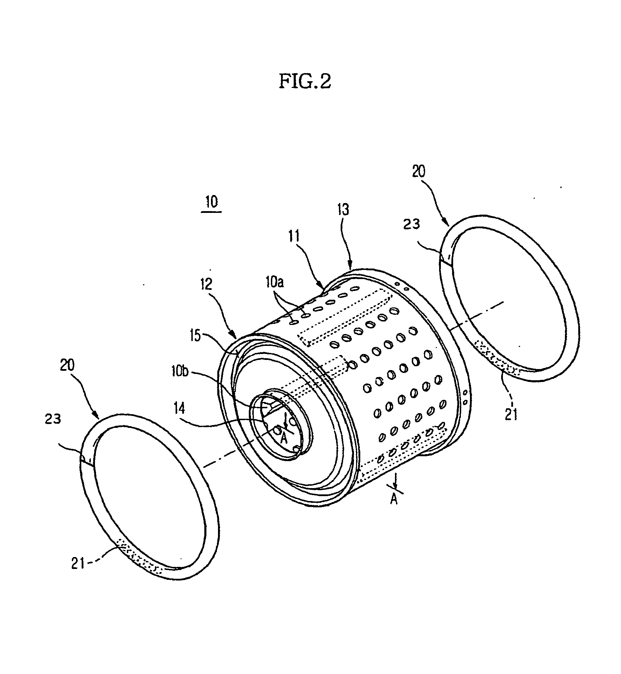

In order to prevent this dynamic unbalance to allow the spin tub 10 to be spun at a high speed with the center of gravity and the center of rotation thereof matched with each other, the spin tub 10 is provided with balancers 20 according to a first or second embodiment of the present invention at front and rear ends thereof. The structure of the balancers 20 according to first and second embodiments of the present invention will be described with reference to FIGS. 2 through 6.

FIG. 2 is a perspective view illustrating balancers according to the embodiment of the present invention, in which the balancers are disassembled from a spin tub.

As illustrated in FIG. 2, the spin tub 10 includes a cylindrical body 11 that has open front and rear ends and is provided with the dehydrating holes 10a and lifters 10b, a front member 12 that is coupled to the open front end of the body 11 and is provided with an opening 14 permitting the laundry to be placed in or removed from the body 11, and a rear member 13 that is coupled to the open rear end of the body 11 and with the rotary shaft 8 for spinning the spin tub 10.

The front member 12 is provided, at an edge thereof, with an annular recess 15 that has the cross section of an approximately "C" shape and is open to the front of the front member 12 in order to hold any one of the balancers 20. Similarly, the rear member 13 is provided, at an edge thereof, with an annular recess 15 (not shown) that is open to the rear of the rear member 13 in order to hold the other of the balancers 20. The annular recess may be provided along an outer circumferential edge of front or rear ends of the spin tub 10.

The front and rear members 12 and 13 are fitted into and coupled to the front or rear edges of the body 11 in a screwed fashion or in any other manner that allows the front and rear members 12 and 13 to be attached to the body 11. Alternatively, the front and rear members 12 and 13 may be integrally affixed to the body 11 of the spin tub 10.

Each balancer 20 is manufactured by forming a linear pipe of a metal, such as a stainless steel, in an annular shape so the balancer 20 is able to be fitted into each recess 15 of the spin tub 10. Then opposite ends of the annular pipe which are in contact with each other are welded together at a joint 23.

When each balancer 20 is manufactured using the metal pipe in this manner, each balancer 20 can be manufactured and assembled in a rapid and convenient way, and each balancer20 has a completely closed structure. As a result, each balancer 20 can be coupled to the spin tub 10 without forming one surface of the spin tub.

Each balancer 20 of the present invention includes a plurality of metal balls 21 filled in the annular pipe having a closed internal space to perform a balancing function, and a viscous fluid (not shown) capable of adjusting a speed of motion of the balls 21. The balls 21 and the viscous fluid are filled in the metal pipe before the opposite ends of the metal pipe are connected to each other and welded together.

The annular balancers 20 manufactured as described above are disposed in the annular recesses 15 provided to the front and rear members 12 and 13 of the spin tub 10, and are welded in the recesses 15 at several points, so that the balancers 20 may be rapidly and conveniently assembled.

As such, if any balancer 20 is determined to fail because the balancer 20 does not fulfill its function after the balancer 20 is assembled to the front or rear member of the spin tub 10, the balancer 20 can be rapidly and conveniently disassembled from the spin tub 10, and then be replaced with a new one.

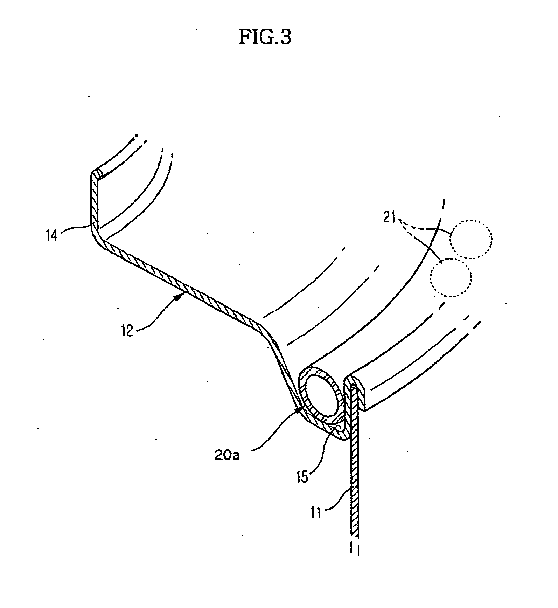

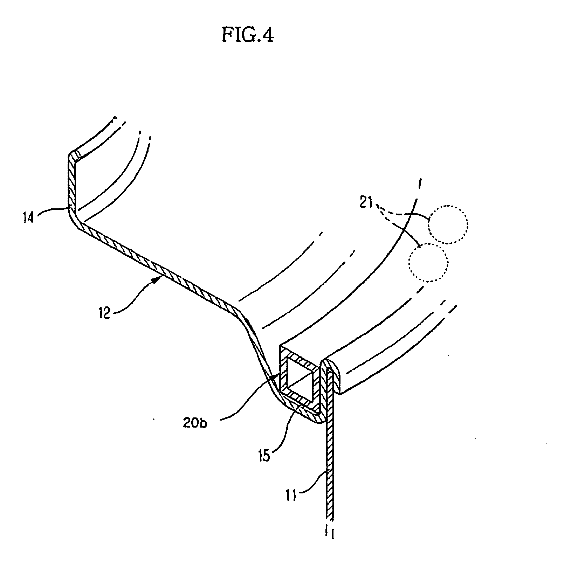

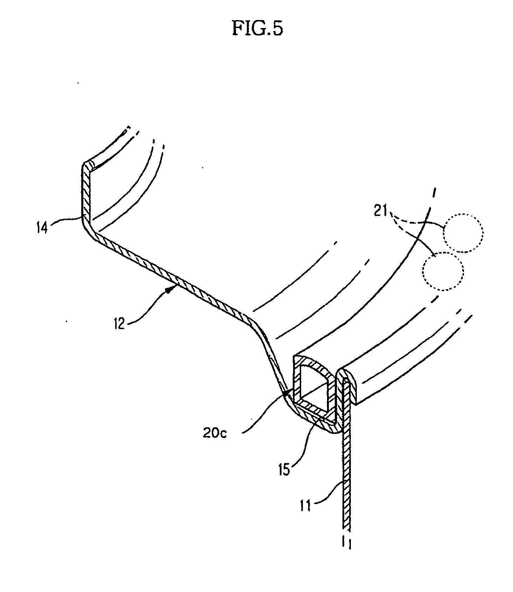

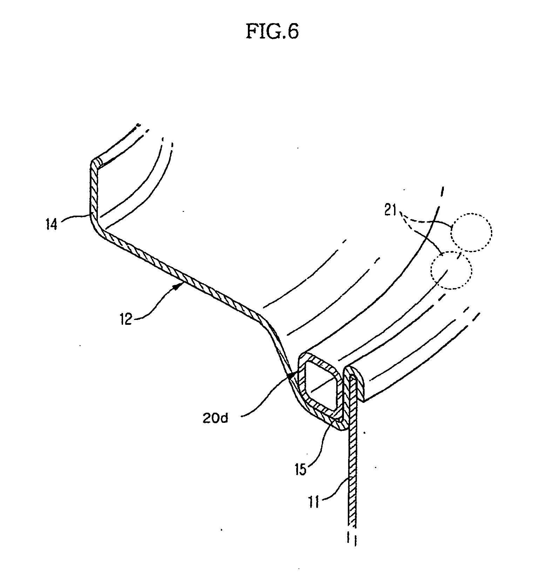

FIGS. 3 through 6 are sectional views taken along line A-A of FIG. 2. More specifically, FIG. 3 illustrates an example in which a balancer according to the first embodiment of the present invention has the cross section of a circle, FIG. 4 illustrates an example in which a balancer has the cross section of a square, according to a second embodiment of the present invention, FIG. 5 illustrates an example in which a balancer has the cross section of a square, one side of which is curved, according to a third embodiment of the present invention, and FIG. 6 illustrates an example in which a balancer has the cross section of a square, all corners of which are rounded, according to a fourth embodiment of the present invention.

As illustrated in FIG. 3, a first embodiment of the balancer20a of the present invention is manufactured such that a metal pipe is bent in an annular shape, and then opposite ends of the metal pipe are weldedtogether. Thereby, the balancer 20a can have a circular cross section. Due to this circular cross section, the balancer 20 can be rapidly manufactured.

As illustrated in FIG. 4, a second embodiment of the balancer 20b of the present invention is manufactured in such a manner that it is manufactured in a manner similar to that of the balancer 20a of FIG. 3. However, the second embodiment of the balancer 20b is formed to have a quadrilateral cross section. Due to this quadrilateral cross section, the balancer 20b can provide a space in which a viscous fluid can flow to corners thereof when the balls 21 move therein, compared to the circular cross section having the same area, so that the balancer 20b allows the spin tub 10 to maintain a dynamic balance more rapidly. Further, the balls 21 move in balancer 20b in a two-point contact state, so that the balls 21 can make a stable motion.

As illustrated in FIG. 5, a third embodiment of the balancer 20c is manufactured to have a quadrilateral cross section, and then at least one side thereof is curved. Thereby, in addition to the advantage of the balancer 20b of FIG. 4, the balls 21 can more stably move in the balancer 20c.

As illustrated in FIG. 6, a fourth embodiment of the balancer 20d is manufactured to have a quadrilateral cross section, similar to that of balancer 20b in FIG. 4, and then all corners thereof are rounded. Thereby, the strength of the balancer 20C can be further increased.

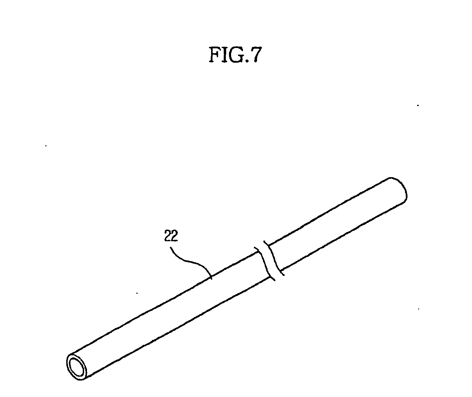

Next, a method of manufacturing a balancer according to the present invention will be described with reference to FIGS. 7 through 12. First, as illustrated in FIG. 7, a linear metal pipe 22 used as material of the balancer 20 of the present invention is prepared. The linear metal pipe 22 is sized to be fitted into and coupled in the recess 15 of the spin tub 10 when bent in an annular shape.

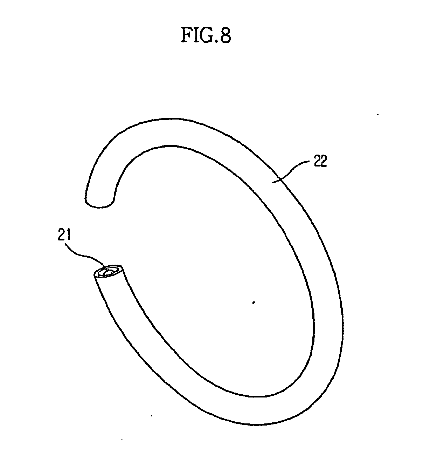

Next, as illustrated in FIG. 8, the linear metal pipe 22 is bent to have an annular shape, and then is filled with a plurality of balls 21 in a manner similar to that shown in FIG. 2 and a viscous fluid.

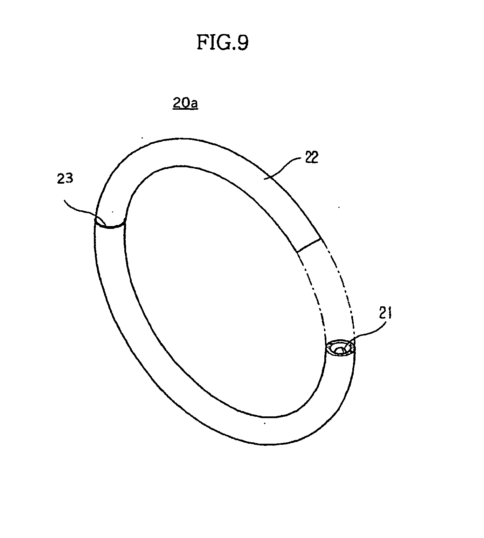

Subsequently, as illustrated in FIG. 9, the bent pipe 22 is welded at opposite ends thereof, so that the balancer 20a has a circular cross section. Thereby, the plurality of balls 21 and the viscous fluid are held in the pipe 22 having a circular cross section in an airtight state, so that the balls 21 and fluid can act as the balancer.

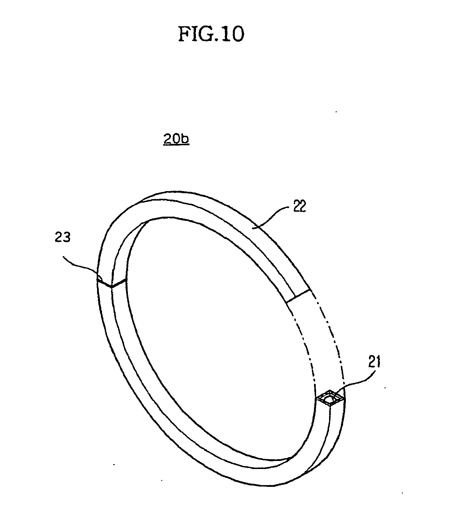

As illustrated in FIG. 10, the annular pipe 22 having a circular cross section is pressed to have a quadrilateral cross section, thereby creating the balancer 20b. The balancer 20b formed to have the quadrilateral cross section can provide a space in which viscous fluid can flow to the corners thereof when the balls 21 move within the pipe 22, compared to the balancer 20a having the circular cross section of the same area, so that the spin tub 10 maintains a dynamic balance with rapidity. Further, the balancer 20b allows the balls 21 to move within the balancer 20b in a two-point contact state, so that the balls 21 make a stable motion.

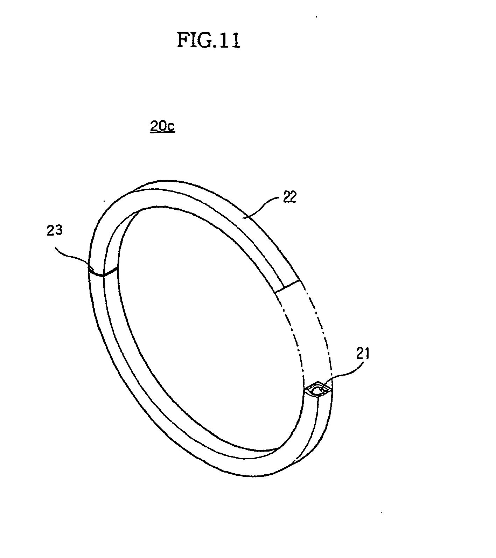

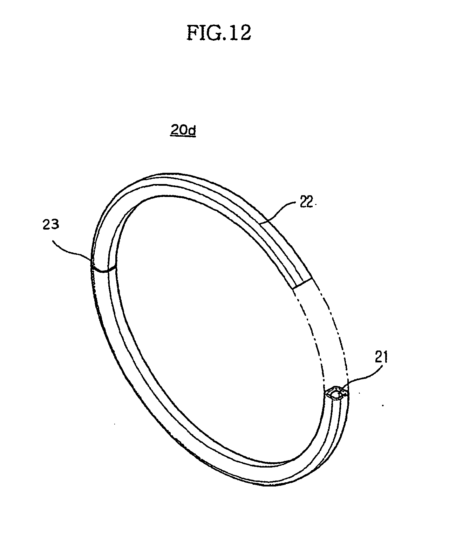

As described above, the balancer 20b is formed to have a quadrilateral cross section. However, the balancer 20b having the quadrilateral cross section may be varied in another structure by an additional formation, as illustrated in FIGS. 11 and 12.

More specifically, as illustrated in FIG. 11, the annular pipe 22 having the quadrilateral cross section can be formed such that at least one side thereof is curved. Thereby, the balancer 20c provides an advantage in that the balls 21 can more stably move therein, in addition to the advantages of having the quadrilateral cross section.

Further, as illustrated in FIG. 12, the annular pipe 22 having the quadrilateral cross section can be formed such that all corners thereof are rounded. Thereby, the strength of the balancer 20d can be further increased.

In the embodiments of the present invention, the balancer has been described to be installed on a drum type washing machine by way of example, but it is apparent that the balancer can be applied to an upright type washing machine having a structure in which a spin tub is vertically installed.

Further, in the embodiments of the present invention, the balancer has mainly been described to have a circular cross section or a quadrilateral cross section, but it is not limited to such a cross section. Therefore, the balancer may have a variety of cross sections, as in polygons.

As described above in detail, the washing machine according to the present invention has a structure in which the balancer manufactured by forming a metal pipe in an annular shape is assembled to the spin tub, so that it can reduce a manufacturing cost and an assembly time to improve its mass productivity. Further, if the balancer is determined to fail after being assembled to the spin tub, the balancer can be rapidly and conveniently replaced with a new one, so that material costs may be reduced.

Further, the washing machine according to the present invention has a weld bead formed only at opposite ends of the bent pipe, so that a height difference between the opposite ends and the weld bead can be reduced to a minimum extent. As a result, the plurality of balls can smoothly move in the balancer, and the noise and vibration caused by the motion of the balls are hardly generated at all.

Although embodiments of the present invention have been described for illustrative purposes, those skilled in the art will appreciate that various modifications, additions and substitutions are possible, without departing from the scope and spirit of the invention as disclosed in the accompanying claims.

## Claims

1. A washing machine having a spin tub (10) and a balancer (20),
having an annular shape, **characterized in that**
a front end and a rear end of the spin tub (10) are open, and the spin tub (10) includes a front member (12) and a rear member (13),
wherein the front member (12) and the rear member (13) are provided with an annular recess (15), and wherein the balancer (20) is provided in the recess (15) of the front member (12) and/or in the recess (15) of the rear member (13), respectively,
wherein the balancer includes viscous fluid and a plurality of balls disposed and movable within an internal space of the balancer,
wherein the balancer has a cross section providing an internal quadrilateral space in which the viscous fluid can flow to internal corners thereof when the balls are moving within the balancer during the rotation of the spin tub, and
wherein the internal corners of the internal quadrilateral space of the balancer are rounded.

2. The washing machine according to claim 1, wherein the front member (12) is provided with an opening (14) permitting the laundry to be placed in or removed from the spin tub (10).

3. The washing machine according to claims 1 or 2, wherein the rear member (13) is coupled with a rotary shaft (8) for spinning the spin tub (10).

4. The washing machine according to one of the preceding claims, wherein the annular recess (15) of the front member (12) is open to the front of the front member (12).

5. The washing machine according to one of the preceding claims, wherein the annular recess (15) of the rear member (13) is open to the rear of the rear member (13).

6. The washing machine according to one of the preceding claims, wherein the balancer (20) is welded in the annular recess (15) at several points in the recess (15).

7. The washing machine according to one of the preceding claims, wherein the balancer (20) includes open ends of a pipe (22) that are welded together.

8. The washing machine according to one of the preceding claims, wherein the balancer (20) comprises a plurality of balancers (20) being coupled to the front member (12) and the rear member (13), wherein the washing machine is a drum type washing machine, and the at least one recess (15) includes a plurality of recesses (15), the recesses (15) being provided at the front and rear members (12,13) of the spin tub (10) such that the balancers (20) are coupled to opposite ends of the spin tub (10).

9. The washing machine according to claim 1, wherein one side of the balancer (20) is curved.

## Patentansprüche

1. Waschmaschine, die eine Drehtrommel (10) und eine Ausgleichseinrichtung (20) mit einer Ringform aufweist, **dadurch gekennzeichnet, dass**
ein vorderes Ende und ein hinteres Ende der Drehtrommel (10) offen sind und die Drehtrommel (10) ein vorderes Element (12) sowie ein hinteres Element (13) enthält,
wobei das vordere Element (12) und das hintere Element (13) mit einer ringförmigen Vertiefung (15) versehen sind und wobei die Ausgleichseinrichtung (20) in der Vertiefung (15) des vorderen Elements (12) und/oder in der Vertiefung (15) des hinteren Elements (13) vorhanden ist,
wobei die Ausgleichseinrichtung eine viskose Flüssigkeit und eine Vielzahl von Kugeln enthält, die innerhalb eines Innenraums der Ausgleichseinrichtung angeordnet und bewegbar sind,
wobei die Ausgleichseinrichtung einen Querschnitt aufweist, der einen inneren vierseitigen Raum bereitstellt, in dem die viskose Flüssigkeit zu inneren Ecken davon fließen kann, wenn die Kugeln sich innerhalb der Ausgleichseinrichtung während der Drehung der Drehtrommel bewegen, und
wobei die inneren Ecken des inneren vierseitigen Raums der Ausgleichseinrichtung gerundet sind.

2. Waschmaschine nach Anspruch 1, wobei das vordere Element (12) mit einer Öffnung (14) versehen ist, die es ermöglicht, die Wäsche in die Drehtrommel (10) einzulegen oder aus ihr zu entnehmen.

3. Waschmaschine nach Anspruch 1 oder 2, wobei das hintere Element (13) mit einer Drehwelle (8) zum Drehen der Drehtrommel (10) gekoppelt ist.

4. Waschmaschine nach einem der vorangehenden Ansprüche, wobei die ringförmige Vertiefung (15) des vorderen Elements (12) zur Vorderseite des vorderen Elements (12) hin offen ist.

5. Waschmaschine nach einem der vorangehenden Ansprüche, wobei die ringförmige Vertiefung (15) des hinteren Elements (13) zur Rückseite des hinteren Elements (13) hin offen ist.

6. Waschmaschine nach einem der vorangehenden Ansprüche, wobei die Ausgleichseinrichtung (20) in der ringförmigen Vertiefung (15) an mehreren Punkten in der Vertiefung (15) angeschweißt ist.

7. Waschmaschine nach einem der vorangehenden Ansprüche, wobei die Ausgleichseinrichtung (20) offene Enden eines Rohrs (22) enthält, die miteinander verschweißt sind.

8. Waschmaschine nach einem der vorangehenden Ansprüche, wobei die Ausgleichseinrichtung (20) eine Vielzahl von Ausgleichseinrichtungen (20) umfasst, die mit dem vorderen Element (12) und dem hinteren Element (13) gekoppelt sind, die Waschmaschine eine Trommel-Waschmaschine ist und die wenigsten eine Vertiefung (15) eine Vielzahl von Vertiefungen (15) enthält, wobei die Vertiefungen (15) an dem vorderen sowie dem hinteren Element (12, 13) der Drehtrommel (10) so vorgesehen sind, dass die Ausgleichseinrichtungen (20) mit gegenüberliegenden Enden der Drehtrommel (10) gekoppelt sind.

9. Waschmaschine nach Anspruch 1, wobei eine Seite der Ausgleichseinrichtung (20) gekrümmt ist.

## Revendications

1. Machine à laver comportant une cuve rotative (10) et un dispositif d'équilibrage (20) de forme annulaire, **caractérisée en ce que**
une extrémité avant et une extrémité arrière de la cuve rotative (10) sont ouvertes, et la cuve rotative (10) comprend un élément avant (12) et un élément arrière (13),
dans laquelle l'élément avant (12) et l'élément arrière (13) sont dotés d'un renfoncement annulaire (15), et dans laquelle le dispositif d'équilibrage (20) est placé dans le renfoncement (15) de l'élément avant (12) et/ou dans le renfoncement (15) de l'élément arrière (13), respectivement,
dans laquelle le dispositif d'équilibrage comporte un fluide visqueux et une pluralité de billes disposées et mobiles à l'intérieur d'un espace interne du dispositif d'équilibrage,
dans laquelle le dispositif d'équilibrage a une section transversale fournissant un espace quadrilatéral interne dans lequel le fluide visqueux peut s'écouler jusque dans des coins de celui-ci quand les billes se déplacent à l'intérieur du dispositif d'équilibrage durant la rotation de la cuve rotative, et
dans laquelle les coins internes de l'espace quadrilatère interne du dispositif d'équilibrage sont arrondis.

2. Machine à laver selon la revendication 1, dans laquelle l'élément avant (12) est doté d'une ouverture (14) permettant de placer le linge dans la cuve rotative (10) et de le retirer de celle-ci.

3. Machine à laver selon la revendication 1 ou 2, dans laquelle l'élément arrière (13) est accouplé à un arbre rotatif (8) afin de faire tourner la cuve rotative (10).

4. Machine à laver selon l'une quelconque des revendications précédentes, dans laquelle le renfoncement annulaire (15) de l'élément avant (12) est ouvert vers le devant de l'élément avant (12).

5. Machine à laver selon l'une quelconque des revendications précédentes, dans laquelle le renfoncement annulaire (15) de l'élément arrière (13) est ouvert vers l'arrière de l'élément arrière (13).

6. Machine à laver selon l'une quelconque des revendications précédentes, dans laquelle le dispositif d'équilibrage (20) est soudé dans le renfoncement annulaire (15) au niveau de plusieurs points dans le renfoncement (15).

7. Machine à laver selon l'une quelconque des revendications précédentes, dans laquelle le dispositif d'équilibrage (20) comporte des extrémités ouvertes d'un tuyau (22) qui sont soudées ensemble.

8. Machine à laver selon l'une quelconque des revendications précédentes, dans laquelle le dispositif d'équilibrage (20) comprend une pluralité de dispositifs d'équilibrage (20) accouplés à l'élément avant (12) et à l'élément arrière (13), la machine à laver étant une machine à laver du type à tambour, et l'au moins un renfoncement (15) comporte une pluralité de renfoncements (15), les renfoncements (15) étant aménagés au niveau des éléments avant et arrière (12, 13) de la cuve rotative (10) de telle sorte que les dispositifs d'équilibrage (20) soient accouplés à des extrémités opposées de la cuve rotative (10).

9. Machine à laver selon la revendication 1, dans laquelle un côté du dispositif d'équilibrage (20) est courbe.
